# FASCICULE DE BREVET EUROPEEN

(11) **EP 1 464 148 B1**
(45) Date de publication et mention de la délivrance du brevet: **10.03.2010**
(21) Numéro de dépôt: 03709860.5
(22) Date de dépôt: 07.01.2003
(51) Int. Cl.: H04L 27/26

(54) **PROCEDE DE GESTION DE COMMUNICATIONS DANS UN RESEAU, SIGNAL, DISPOSITIF ET TERMINAL RECEPTEUR CORRESPONDANTS.**
KOMMUNIKATIONSVERWALTUNGSVERFAHREN IN EINEM NETZWERK, SIGNAL, VORRICHTUNG UND EMPFANGSGERÄT DAFÜR
METHOD OF MANAGING COMMUNICATIONS IN A NETWORK AND THE CORRESPONDING SIGNAL, TRANSMITTING DEVICE AND DESTINATION TERMINAL

(30) Priorité: 10.01.2002 FR 0200281
(43) Date de publication de la demande: 06.10.2004
(73) Titulaire: Wavecom, 92442 Issy les Moulineaux (FR)
(72) Inventeur: BASSOMPIERRE, Antoine, F-75014 Paris (FR); GOUDARD, Nathalie, F-92400 Courbevoie (FR)
(74) Mandataire: Vidon, Patrice
(86) Numéro de dépôt international: PCT/FR2003/000030
(87) Numéro de publication internationale: WO 2003/058906

(56) Documents cités:
- WO-A-98/02982
- FR-A- 2 777 407
- LACROIX D ET AL: "OFDM with guard interval versus OFDM/offsetQAM for high data rate UMTS downlink transmission" IEEE 54TH VEHICULAR TECHNOLOGY CONFERENCE. VTC FALL 2001. PROCEEDINGS (CAT. NO.01CH37211), IEEE 54TH VEHICULAR TECHNOLOGY CONFERENCE. VTC FALL 2001. PROCEEDINGS, ATLANTIC CITY, NJ, USA, 7-11 OCT. 2001, pages 2682-2686 vol.4, XP002212791 2001, Piscataway, NJ, USA, IEEE, USA ISBN: 0-7803-7005-8

## Description

La présente invention se rapporte au domaine des télécommunications. Plus précisément, l'invention concerne la transmission et le traitement de données, notamment dans un réseau cellulaire, en particulier à des débits élevés.

Les systèmes de radiotéléphonie de troisième génération, et les suivants, prennent ou prendront en compte de nombreux services et applications supposant la transmission de données à des débits très élevés. Les ressources allouées aux transferts de données (par exemple des fichiers contenant du son et/ou des images fixes ou animées), notamment via le réseau Internet ou des réseaux similaires, représenteront une part prépondérante de la ressource disponible et seront probablement supérieures, à terme, aux ressources allouées aux communications vocales, qui devraient rester sensiblement constantes.

Cependant, le débit total offert aux utilisateurs d'équipement de radiotéléphonie est limité par le nombre de fréquences disponibles. Afin de permettre une disponibilité suffisante des ressources, on a traditionnellement recours, notamment, à une densification des cellules sur un territoire donné. On crée ainsi une infrastructure de réseau divisée en « micro-cellules » qui sont des cellules de relativement petite taille. Un inconvénient de cette technique est qu'elle nécessite une multiplication des stations fixes (station de base ou BS de l'anglais « Base Station » appelé « Noeud B » de l'anglais « Node B » selon la norme UMTS), qui sont des éléments relativement complexes et coûteux. En outre, le débit de données possible, quoique élevé, n'est pas optimal. De plus, au niveau supérieur, il est clair que plus il y a de cellules, donc de stations fixes, plus la gestion est complexe.

Les réseaux de troisième génération UMTS (de l'anglais « Universal Mobile Telecommunication System » ou « Système de Télécommunication Mobile Universel ») ont également une capacité limitée par les interférences entre cellules ou réseaux voisins.

Par ailleurs, les systèmes de troisième génération en cours de développement reposent, comme les systèmes de radiotéléphonie existants, sur une structure symétrique. Ainsi, le standard UMTS défini au 3GPP (de l'anglais « Third Generation Partnerchip Project » ou « Projet de partenariat de troisième génération ») prévoit, pour le lien principal FDD (de l'anglais « Frequency Division Duplex » ou « duplex par répartition de fréquence »), une répartition symétrique entre la voie descendante (station de base vers terminal) et la voie montante (terminal vers station de base). Il existe également un lien TDD (de l'anglais « Time Division Duplex » ou « duplex par répartition de temps ») permettant une certaine asymétrie. Cependant, l'asymétrie ainsi offerte est limitée face aux besoins des utilisateurs en services haut débit de type Internet, avec ou sans mobilité, sur la voie descendante.

Une solution consiste alors à utiliser, conjointement au W-CDMA (de l'anglais « Wide-Code Division Multiple Access » ou « Accès Multiple par répartition de code à large bande ») (mis en oeuvre sur un canal principal) des modulations multi-porteuses (mises en oeuvre sur un canal secondaire). On peut, par exemple, introduire un canal OFDM (de l'anglais « Orthogonal Frequency Division Multiplex » ou « Multiplexage par division orthogonal des fréquences ») sur un canal secondaire descendant à haut débit et partagé par tous les équipements d'utilisateurs d'une même cellule (tel que décrit notamment dans le brevet FR 2 777 407 déposé le 10 avril 1998 par la société Wavecom). Cette technique de l'art antérieur a pour inconvénient de présenter des perturbations entre les signaux OFDM et les signaux à simple porteuse pour un équipement d'utilisateur. En outre, le basculement de données de signalisation du canal principal vers le canal secondaire n'est pas optimisé et consomme inutilement de la bande passante sur le canal secondaire. De plus, la mise en oeuvre de cette technique est relativement complexe et donc coûteuse, un équipement d'utilisateur devant être notamment apte à recevoir des données sur le canal secondaire descendant et, simultanément, à émettre des données sur le canal principal montant.

L'invention selon ses différents aspects a notamment pour objectif de pallier ces inconvénients de l'art antérieur.

Plus précisément, un objectif de l'invention est de fournir une nouvelle technique de gestion de communication, permettant la transmission de données à haut débit, vers des terminaux, par exemple de type mobiles de radiotéléphonie.

Un autre objectif de l'invention est de fournir une telle technique, qui soit compatible avec des standards connus de radiocommunication mobile et en particulier le standard UMTS.

L'invention a également pour objet de fournir une telle technique, qui optimise l'utilisation de la ressource disponible, en temps et en fréquence, et qui s'appuie sur un procédé de transmission particulièrement adapté à la transmission de données à haut débit.

Un autre objectif de l'invention est de fournir une telle technique, qui permette une mise en oeuvre relativement simple des terminaux d'utilisateurs et donc peu coûteuse.

L'invention a également pour objectif de fournir une telle technique, permettant la réception de données à haut débit, même dans des conditions de réception défavorables (notamment pour une vitesse de déplacement de l'équipement d'utilisateur élevée, par exemple de l'ordre d'au moins 250 km/h, et/ou dans des conditions de réception avec trajets multiples).

En outre, l'invention a pour objectif d'optimiser la transmission de données en permettant notamment une augmentation globale des débits dans un ou plusieurs réseaux couvrant une même zone géographique ou des zones voisines.

Dans ce but, l'invention propose un procédé de gestion de communications dans un réseau de communication comprenant au moins un dispositif d'émission et au moins un terminal adapté à recevoir des données d'au moins un des dispositifs d'émission, remarquable en ce qu'il comprend les étapes suivantes :
- établissement d'une communication entre un du ou des dispositifs d'émission, dit dispositif émetteur et un des terminaux, dit terminal récepteur, à l'aide d'un premier mode de communication basé sur une modulation à porteuse unique ; et
- passage à un second mode de communication utilisant une modulation à porteuses multiples, un canal de communication utilisant la modulation à porteuses multiples étant affecté à la communication entre le dispositif émetteur et le terminal récepteur ;
les premier et second modes de communication étant mis en oeuvre successivement et alternativement.

Selon une caractéristique particulière, le procédé est remarquable en ce que la modulation est une modulation de type OFDM avec intervalle de garde.

Selon une caractéristique particulière, le procédé est remarquable en ce que la modulation est une modulation de type IOTA.

Ainsi, l'invention permet une mise en oeuvre de modulation à porteuses multiples, notamment de type OFDM avec intervalle de garde ou IOTA, une modulation de type IOTA étant particulièrement adaptée à la transmission de données à haut débit, notamment dans des conditions d'émissions/réceptions défavorables (par exemple en présence d'un canal radio fortement bruité ou soumis à un effet Doppler).

On rappelle que la modulation de type IOTA (de l'anglais « Isotropic Orthogonal Transform Algorithm ») est définie dans le brevet FR 2 733 869 déposé le 2 mai 1995. La modulation IOTA est notamment basée sur un signal multiporteuse destiné à être transmis vers un récepteur numérique, correspondant au multiplexage en fréquence de plusieurs porteuses élémentaires correspondant chacune à une série de symboles, deux symboles consécutifs étant séparés d'un temps symbole τ₀, l'espacement ν₀ entre deux porteuses voisines étant égal à la moitié de l'inverse du temps symbole τ₀, et chaque porteuse subissant un filtrage de mise en forme de son spectre présentant une largeur de bande strictement supérieure à deux fois l'espacement entre porteuses ν₀, le filtrage étant choisi de façon que chaque symbole soit fortement concentré dans le domaine temporel et dans le domaine fréquentiel.

Selon une caractéristique particulière, le procédé est remarquable en ce que le premier mode de communication est adapté à effectuer des opérations de gestion d'établissement, de maintien et de clôture d'une communication entre le dispositif émetteur et le terminal récepteur.

Ainsi, le premier mode est particulièrement bien adapté à de la gestion de communication qui ne nécessite pas de haut débit.

Selon une caractéristique particulière, le procédé est remarquable en ce que leréseau de communication est un réseau de communication mobile (UMTS).

Selon une caractéristique particulière, le procédé est remarquable en ce que le premier mode de communication met en oeuvre au moins un canal commun destiné à l'ensemble des terminaux gérés par le dispositif émetteur.

Ainsi, l'utilisation d'au moins un canal commun permet, notamment, un temps d'établissement de la communication pour la transmission de données à haut débit relativement court (ce qui n'est pas le cas si on utilise un canal dédié).

En outre, la mise en oeuvre d'au moins un canal commun dans le premier mode de communication est beaucoup plus simple que la mise en oeuvre d'un canal dédié. En utilisant un ou plusieurs canaux communs pour le premier mode de communication, il n'est notamment pas nécessaire de mettre en oeuvre une procédure de « hand-over » lorsque l'on bascule vers un mode OFDM, alors que l'utilisation d'un canal dédié imposerait une telle procédure ou d'intégrer deux récepteurs (qui seraient affectés chacun à l'un des modes) au sein du terminal récepteur.

De plus, la mise en oeuvre d'un premier mode de communication mettant en oeuvre au moins un canal commun permet d'éviter les perturbations entre un canal destiné notamment à l'établissement d'une communication (par exemple basé sur l'utilisation d'un accès de type à répartition par code à large bande (ou WCDMA de l'anglais « Wide Code Division Multiple Access ») et un canal permettant la transmission de données à haut débit (basé par exemple sur une modulation OFDM).

Cette caractéristique permet, en outre, un plus grand choix dans les gammes de fréquences utilisables pour le second mode de communication.

Selon une caractéristique particulière, le procédé est remarquable en ce que le premier mode de communication met en oeuvre au moins un canal commun descendant de type canal d'accès (FACH) permettant le passage au second mode de communication.

De cette manière, l'invention est avantageusement mise en oeuvre dans un réseau UMTS, le premier mode de communication mettant en oeuvre les canaux communs, par exemple un canal commun descendant de type FACH, définis dans la norme.

Selon une caractéristique particulière, le procédé est remarquable en ce que le premier mode de communication met en oeuvre au moins un canal commun montant (RACH) pour acquitter des données transmises correctement au terminal récepteur lors de la mise en oeuvre du second mode de communication.

Selon une caractéristique particulière, le procédé est remarquable en ce que le second mode de communication est adapté à transmettre des données à haut débit entre le dispositif émetteur et le terminal récepteur.

Selon une caractéristique particulière, le procédé est remarquable en ce que le second mode de communication est adapté à transmettre des données de type internet au terminal récepteur.

Ainsi, le second mode de transmission étant particulièrement bien adapté à la transmission de données à haut débit notamment dans le sens descendant, l'invention peut être appliquée de manière fiable et efficace à la transmission de données de type internet (e-mail, consultation de sites web, transfert de fichiers, d'image et/ou de sons...).

Selon une caractéristique particulière, le procédé est remarquable en ce que le dispositif émetteur est une station de base de réseau de communication cellulaire.

Ainsi, l'invention permet une mise en oeuvre au sein d'un réseau cellulaire particulièrement efficace, la station de base mettant en oeuvre un premier mode de communication à relativement bas débit compatible avec les normes existantes de réseaux cellulaires (par exemple UMTS) et un second mode de communication permettant le transfert de données à haut débit dans un environnement qui peut être difficile.

L'invention concerne, en outre, un signal de réseau de communication comprenant au moins un dispositif d'émission et au moins un terminal adapté à recevoir des données du ou des dispositifs d'émission, remarquable en ce qu'il comprend deux modes de communication, dits respectivement premier et second modes de communication :
- le premier mode de communication basé sur une modulation à porteuse unique, étant mis en oeuvre lors de l'établissement d'une communication au moins un des dispositif d'émission, dit dispositif émetteur et entre un des terminaux, dit terminal récepteur ; et
- le second mode de communication utilisant une modulation à porteuses multiples, étant mis en oeuvre sur un canal de communication utilisant la modulation à porteuses multiples, affecté à la communication entre le dispositif émetteur et le terminal récepteur ;
les premier et second modes de communication étant mis en oeuvre successivement et alternativement.

L'invention concerne également un dispositif émetteur destiné à être mis en oeuvre dans un réseau de communication comprenant au moins un terminal adapté à recevoir des données du dispositif émetteur,
remarquable en ce qu'il comprend les moyens suivants :
- moyens d'établissement d'une communication entre le dispositif émetteur et un des terminaux, dit terminal récepteur, à l'aide d'un premier mode de communication basé sur une modulation à porteuse unique ; et
- moyens de passage à un second mode de communication utilisant une modulation à porteuses multiples, un canal de communication utilisant la modulation à porteuses multiples étant affecté à la communication entre le dispositif émetteur et le terminal récepteur ;
les premier et second modes de communication étant mis en oeuvre successivement et alternativement.

De plus, l'invention concerne un terminal récepteur destiné à être mis en oeuvre dans un réseau de communication comprenant au moins un dispositif d'émission, le terminal étant adapté recevoir des données du ou des dispositifs d'émission, remarquable en ce qu'il comprend les moyens suivants :
- moyens d'établissement d'une communication entre un des dispositifs d'émission, dit dispositif émetteur, et le terminal à l'aide d'un premier mode de communication basé sur une modulation à porteuse unique ; et
- moyens de passage à un second mode de communication utilisant une modulation à porteuses multiples, un canal de communication utilisant la modulation à porteuses multiples étant affecté à la communication entre le dispositif émetteur et le terminal récepteur ;
les premier et second modes de communication étant mis en oeuvre successivement et alternativement.

Les avantages du terminal récepteur, du dispositif émetteur et du signal sont les mêmes que ceux du procédé de gestion de communication, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de réseau conforme à l'invention selon un mode particulier de réalisation;
- la figure 2 décrit une station de base de « micro-cellule » du réseau illustré en regard de la figure1; et
- la figure 3 illustre un protocole de communication entre différents éléments du réseau de la figure 1, permettant le passage d'un premier à un second mode de communication.

Le principe général de l'invention repose sur le passage d'un premier mode de communication utilisant une modulation simple porteuse pour gérer les communications (établissement, maintien et fin), basée, par exemple, sur les canaux de type UMTS (notamment le canal commun FACH) à un second mode de communication basé sur une modulation à porteuses multiples (notamment OFDM, par exemple, de type avec intervalle de garde ou de type IOTA) pour transmettre à haut débit des données.

Selon un mode particulier de réalisation de l'invention, un terminal peut ainsi utiliser un canal PRACH pour effectuer une requête au réseau auquel il appartient, une station de base recevant la requête transmettant alors la réponse et/ou les données sur un canal commun utilisant une modulation OFDM lorsque le débit est trop important pour être supporté par le canal commun FACH (« Forward Access Channel »).

Les modulations à porteuses multiples associées à un codage correcteur d'erreur et à un entrelacement, ont montré leur intérêt notamment pour les transmissions à haut débit en environnement radio-mobile. L'utilisation de techniques de modulation à porteuses multiples (notamment OFDM avec intervalle de garde ou IOTA) est donc avantageuse lorsqu'une haute efficacité spectrale est souhaitée et que le canal est fortement non-stationnaire.

Par ailleurs, contrairement aux réseaux compatibles avec la norme GSM pour lesquels il faut ouvrir un canal dédié pour les mises à jour de localisation, selon la norme UMTS, le canal PRACH est le seul canal physique utilisé pour les mises à jour de localisation. Il possède un débit limité mais néanmoins bien supérieur à celui du GSM, ce qui permet d'offrir une telle solution qui ne soit pas limitée à des applications de diffusion.

L'invention permet donc le passage d'un premier mode de communication à porteuse simple à un second mode de communication à porteuses multiples, un canal à porteuses multiples étant affecté préférentiellement à une communication entre une station de base et un terminal et non limité à une application de diffusion concernant plusieurs terminaux.

En outre, selon l'invention, un terminal peut utiliser un canal PCPCH (Physical Common Packet Channel) au lieu d'un canal PRACH pour notamment transmettre une requête à la station de base de transfert de données, celles-ci étant alors transmise à haut débit dans le sens descendant selon une modulation à porteuses multiples. On peut ainsi combiner un canal OFDM à un canal PCPCH.

On note que les terminaux utilisateurs sont notamment des terminaux mobiles ou fixes sans fil (par exemple des téléphones mobiles ou tout autre appareil (notamment ordinateurs portables) comprenant un système de communication sans fil).

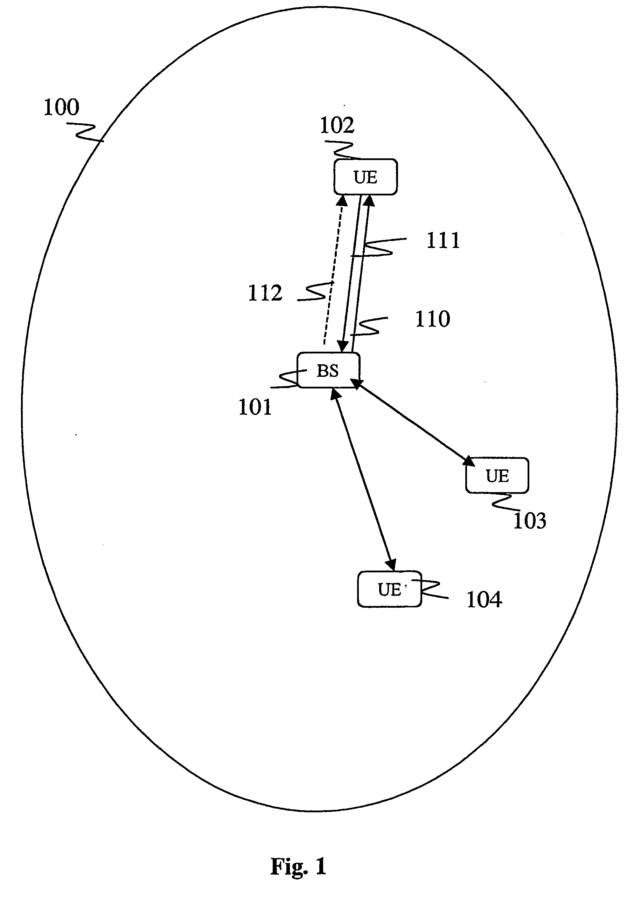

On présente, en relation avec la figure 1, un synoptique de réseau de radiotéléphonie mobile mettant en oeuvre l'invention.

Le réseau est par exemple un réseau compatible avec la norme UMTS(« Universal Mobile Telecommunication System ») définie par le comité 3GPP.

Le réseau comprend une cellule 100 qui est gérée par une station de base 101 (BS).

La cellule 100 comprend elle-même la station de base 101 et des terminaux (UE) 102, 103 et 104.

Les terminaux 102, 103 et 104 peuvent échanger des données (pour une couche de type application) et/ou de signalisation avec la station de base 101 via des canaux montants et descendants. Ainsi, le terminal 102 et la station de base 101 sont reliés en communication par :
- un canal descendant 110 à simple porteuse permettant le transport de données de signalisation et/ou de contrôle de la communication avec le terminal 102 ;
- un canal montant 111 à simple porteuse permettant également le transport de données de signalisation et/ou de contrôle de la communication ; et
- un canal descendant 112 à porteuses multiples, par exemple de type OFDM, permettant le transfert de données à haut débit de la station de base 101 vers le terminal 102.

Par défaut, les terminaux sont en mode veille, c'est-à-dire dans un mode où ils ne sont pas en mode communication mais présents et disponibles pour une communication. Dans un premier mode de communication, ces terminaux sont notamment à l'écoute de signaux émis par la station de base 101 sur un canal descendant utilisant une modulation simple porteuse. Ces signaux sont émis sur :
- des canaux de transport communs correspondant aux services offerts vers les couches hautes du protocole de communication, notamment sur des canaux BCH ( ou « canal de diffusion » de l'anglais « Broadcast CHannel ») et PCH (ou « canal de recherche de mobile » de l'anglais « Paging CHannel ») ; et
- des canaux de transport communs correspondants à la couche physique du protocole de communication, notamment sur des canaux CPICH (ou « canal commun pilote » de l'anglais « Common PIlot CHannel »).

Les canaux utilisés par les réseaux mobiles de troisième génération (ou 3G) sont bien connus de l'homme du métier des réseaux mobiles et sont notamment spécifiés dans la norme « 3^{rd} Generation Partnership Project ; Technical Specification Group Radio Access Network ; Physical Channels and mapping of transport channels onto physical channels (FDD) release 1999 » de référence 3GPP TS25.211 et diffusée par le bureau des publications de 3GPP. Ces canaux ne seront donc pas décrits plus amplement.

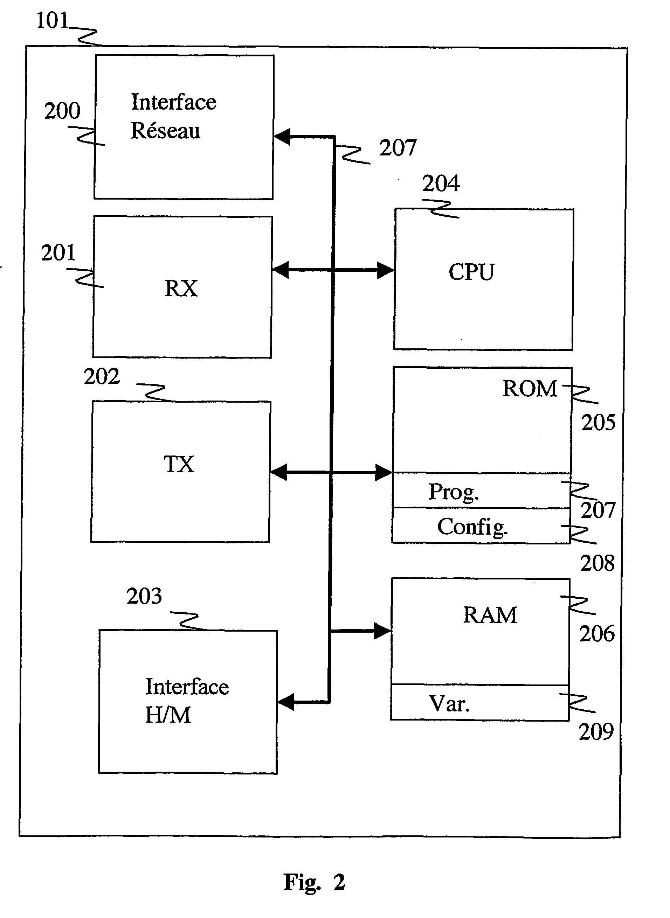

La figure 2 illustre schématiquement la station de base 101 telle qu'illustrée en regard de la figure 1.

La station de base 101 comprend, reliés entre eux par un bus d'adresses et de données 207 :
- un processeur 204 ;
- une mémoire vive 206 ;
- une mémoire non volatile 205 ;
- une interface réseau filaire 200 permettant une liaison vers une infrastucture fixe du réseau mobile ou vers d'autres réseaux;
- une interface radio de réception 201 permettant de recevoir les signaux émis par les terminaux en communication avec la station de base 101 sur des canaux montants dédiés;
- une interface radio d'émission 202 permettant d'émettre des signaux suivant une modulation à porteuse simple ou à porteuses multiples sur des canaux dédiés descendant et sur des canaux de transport communs correspondant à la couche physique; et
- une interface homme/machine 203 permettant un dialogue avec la machine pour le contrôle et la maintenance.

La mémoire vive 206 conserve des données, des variables é09 et des résultats intermédiaires de traitement.

La mémoire non volatile 205 conserve dans des registres qui par commodité possèdent les mêmes noms que les données qu'ils conservent, notamment :
- le programme de fonctionnement du processeur 204 dans un registre « *prog* » 210 et
- les paramètres 211 de configuration de la station de base 101.

On note qu'un terminal non représenté comprend reliés entre eux par un bus d'adresses et de données :
- un processeur ;
- une mémoire vive ;
- une mémoire non volatile ;
- une interface radio de réception permettant de se synchroniser et de recevoir d'une manière générale les signaux émis par la station de base 101 en modulation à simple porteuse ou à porteuses multiples ;
- une interface radio d'émission permettant d'émettre des signaux en modulation à simple porteuse sur des canaux dédiés montants et sur des canaux de transport communs montants; et
- une interface homme/machine permettant un dialogue avec la machine pour le contrôle et la maintenance.

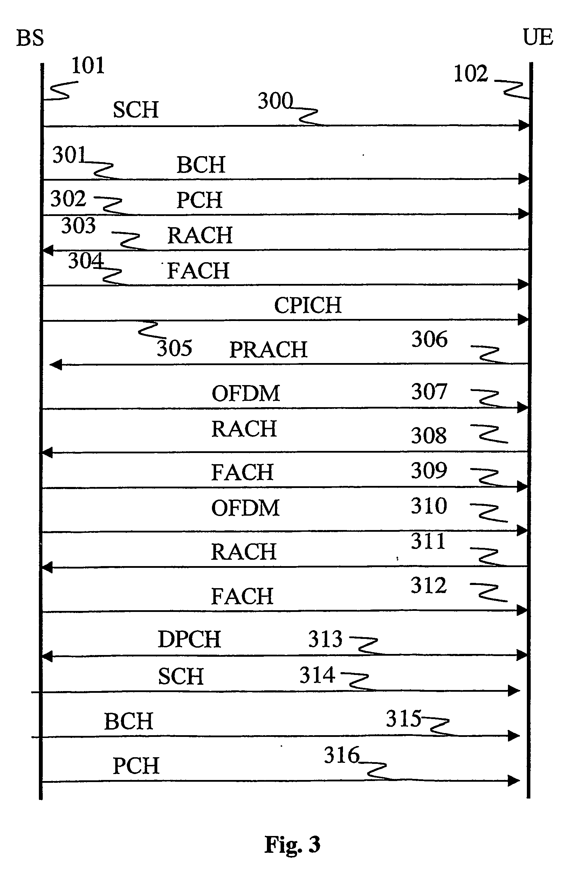

La figure 3 illustre un protocole de communication entre la station de base 101 et le terminal 102 lors d'une communication mettant en oeuvre un premier mode de communication utilisant une modulation à simple porteuse et un deuxième mode de communication basé sur l'utilisation d'un canal affecté au terminal 102 en modulation à porteuses multiples.

La station de base 101 émet un signal 300 sur le canal descendant SCH à destination des terminaux présents dans la cellule 100 et notamment du terminal 102. Ainsi, le terminal 102 est synchronisé sur le canal SCH de la station de base 101.

On note que ce signal SCH est émis régulièrement par la station de base 101 et que dès que la synchronisation du terminal 102 se dégrade au delà d'un certain seuil prédéterminé, il se synchronise à nouveau sur la station de base 101.

La station de base 101 émet également un signal 301 sur le canal BCH. Ce signal descendant indique au terminal 102 quel canal PCH il doit écouter. Ainsi, après réception de ce signal, le terminal 102 se met en écoute du canal PCH indiqué par le signal 302.

Puis, la station de base 101 émet un signal à destination du terminal 102 sur le canal PCH indiqué par le signal 301, ce signal permettant de détecter un appel entrant.

Ensuite, en supposant que le terminal 102 désire initialiser une communication, il émet un signal 303 sur le canal RACH (de l'anglais « Random Access CHannel » qui est un canal commun correspondant à un service de couche haute d'accès au canal), ce signal 303 indiquant à la station de base 101 que le terminal 102 demande l'établissement d'une communication.

Puis, la station de base 101 émet un signal 304 d'allocation de canal de communication sur le canal FACH (de l'anglais « Fast Access CHannel » qui est également un canal commun correspondant à un service de couche haute) selon le premier mode de communication (à porteuse unique).

Les signaux correspondant au premier mode de communication sont compatibles avec les deux premières couches (physique et liaison) définies par la norme UMTS. Selon l'invention, au niveau 3, la station de base indique où, quand et comment écouter l'OFDM.

Puis, le terminal 102 se met en écoute du canal pilote 305 CPICH qui permet selon l'invention d'affiner la synchronisation du terminal 102.

Ensuite, la communication s'établit entre le terminal 102 et la station de base 101.

Le mobile envoie une requête par l'intermédiaire du canal montant PRACH 306 (canal physique correspondant au canal RACH) tout en écoutant le canal FACH 304, pour avoir la réponse du réseau, comme prévu par la norme UMTS - FDD actuelle. Si le réseau décide que les informations à transmettre au mobile sont de taille importante, en particulier si le débit offert par le canal FACH ne suffit pas, la station de base 101 indique au terminal 102 par le biais du canal FACH 304 correspondant au premier mode de communication d'écouter le canal OFDM associé au second mode de communication.

Ainsi, selon l'invention, l'utilisation d'un canal commun, dit canal OFDM, utilisant une modulation OFDM est couplée avec les canaux communs RACH/FACH (c'est-à-dire le terminal émet une requête RACH et la station de base répond avec une trame FACH qui indique au terminal 102 que la transmission de données entre la station de base 101 et le terminal 102 est effectuée selon un second mode de communication à porteuses multiples) sans changer les caractéristiques physiques de transmission du RACH (canal montant) et du FACH (canal descendant).

Le canal FACH transporte les informations de signalisation permettant au mobile d'écouter correctement le canal OFDM. Le FACH indique quand (c'est-à-dire à quel instant débute et se termine le bloc destiné au terminal), où (dans la bande de fréquence, la transmission n'utilise pas nécessairement toute la bande fréquentielle disponible) et comment (étalement Doppler, étalement de retard, ...) écouter le canal OFDM pour recevoir le bloc de données concerné. Par défaut, la station de base utilise une modulation OFDM avec des caractéristiques (temps symboles, espacements entre les sous-porteuses et répartition des symboles de référence ou symboles pilotes) prédéterminées. Selon une variante, ces caractéristiques seront optimisées dynamiquement par la station de base et adaptées en fonction des caractéristiques du canal de propagation.

Ainsi, la communication entre la station de base 101 et le terminal 102 bascule dans un second mode de communication qui utilise une modulation à porteuses multiples. Ainsi, la station de base 101 transmet des données sur le canal commun OFDM par l'intermédiaire du signal 307.

Puis, un acquittement de niveau 2 est envoyé par le terminal 102 sur le canal RACH 308.

Le terminal se remet alors en écoute du canal FACH 309.

Puis, des signaux FACH 309, OFDM 310 et RACH 311 similaires respectivement aux signaux 304, 307 et 308 sont échangés par la station de base 101 et le terminal 102. Ces échanges peuvent être réitérés en fonction du nombre de données à transmettre.

Selon une variante, un canal étant affecté à la liaison entre la station de base 101 et le terminal 102, la transmission des données se fait en mode 2 transparent, sans envoyer de PRACH en dehors de la demande initiale PRACH 305 (c'est-à-dire sans acquittement).

En fin de communication, le terminal 102 et/ou la station de base 101 indiquent par l'intermédiaire du canal FACH 312 que la communication se termine.

Le terminal 102 retourne donc dans un mode veille et au premier mode de communication basé sur une modulation à simple porteuse.

La station de base 101 émet alors des signaux respectivement 313, 314 et 315 sur les canaux SCH, BCH et PCH, ces signaux étant similaires aux signaux respectivement 300, 301 et 302 décrits précédemment.

Selon la figure 3, l'utilisation de l'OFDM ne nécessite pas d'implémentation de « hand-over » car les changements de cellules se font normalement en mode dit CELL_FACH entre deux réceptions de blocs, ce qui est particulièrement avantageux quand on sait la difficulté de normaliser et d'implémenter le « hand-over ».

Par ailleurs, du fait de l'utilisation des canaux RACH/FACH, on peut faire de la sectorisation (en anglais « beam-forming ») pour émettre les données. Le terminal 102 peut en effet être localisé par l'intermédiaire des canaux RACH/FACH.

Le terminal 102 ne reçoit jamais un signal OFDM en même temps qu'il émet sur un canal simple porteuse de type WCDMA FDD. Cela permet de fortement faciliter le choix de la bande de fréquence à utiliser pour le canal OFDM, étant donné qu'il n'y a pas de nécessité à être très éloigné du canal FDD montant. Il n'y a pas non plus de réception simultanée sur un canal OFDM et sur une canal simple porteuse de type WCDMA FDD (ce qui implique qu'un double récepteur radio sur le terminal 102 n'est pas nécessaire).

En outre, le contrôle de puissance sur le canal OFDM n'a pas besoin d'être effectué en continu comme sur un canal FDD. Néanmoins, le réseau peut mesurer la puissance à laquelle il reçoit le RACH pour déterminer la puissance à laquelle il va émettre en OFDM.

Bien entendu, l'invention n'est pas limitée aux exemples de réalisation mentionnés ci-dessus.

En particulier, l'homme du métier pourra apporter toute variante dans type de modulation à porteuses multiples utilisée. Ainsi, la modulation pourra être par exemple de type OFDM telle que décrite notamment dans le brevet FR 2 777 407 déposé le 10 avril 1998 par la société Wavecom ou une modulation de type IOTA définie dans le brevet FR 2 733 869 déposé le 2 mai 1995.

L'invention ne se limite pas aux réseaux UMTS ou 3G, mais s'étend aux communications entre une station émettrice et un terminal, notamment lorsqu'une haute efficacité spectrale est souhaitée et que le canal est fortement stationnaire. Ainsi, les supports possibles de l'invention sont, par exemple, des systèmes de radiodiffusion numérique terrestre qu'il s'agisse d'image, de sons et/ou de données ou des systèmes de communication numérique vers des mobiles à haut débit (dans des réseaux mobiles, des réseaux locaux radio ou pour des transmissions vers ou en provenance de satellites) ou encore pour des transmissions sous-marines utilisant un canal de transmission acoustique.

Les applications de l'invention sont variées et permettent notamment des services haut débit de type internet (dans le cas de l'application de l'invention à UMTS, le débit faible du canal RACH, quoique beaucoup plus fort qu'en GSM couplé au débit très élevé du canal OFDM, correspond bien aux besoins de tels services)

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est mise en oeuvre partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de gestion de communications dans un réseau de communication (100) comprenant au moins un dispositif d'émission (101) et au moins un terminal (102) adapté à recevoir des données dudit au moins un dispositif d'émission, comprenant les étapes suivantes :
- établissement (304, 309, 312) d'une communication entre un desdits dispositif d'émission, dit dispositif émetteur, et un desdits terminaux, dit terminal récepteur, à l'aide d'un premier mode de communication basé sur une modulation à porteuse unique ; et
- passage à un second mode de communication (307, 310) utilisant une modulation à porteuses multiples (OFDM), un canal de communication utilisant ladite modulation à porteuses multiples étant affecté à la communication entre ledit dispositif émetteur et ledit terminal récepteur ;
**caractérisé en ce que** lesdits premier et second modes de communication sont mis en oeuvre successivement et alternativement.

2. Procédé selon la revendication 1, **caractérisé en ce que** ladite modulation est une modulation de type OFDM avec intervalle de garde.

3. Procédé selon la revendication 1, **caractérisé en ce que** ladite modulation est une modulation de type IOTA.

4. Procédé selon l'une quelconque des revendications 1 à 3, **caractérisé en ce que** ledit premier mode de communication est adapté à effectuer des opérations de gestion d'établissement (301, 302, 304), de maintien (309) et de clôture (312) d'une communication entre ledit dispositif émetteur et ledit terminal récepteur.

5. Procédé selon l'une quelconque des revendications 1 à 4, **caractérisé en ce que** ledit réseau de communication est un réseau de communication mobile (UMTS).

6. Procédé selon la revendication 5, **caractérisé en ce que** ledit premier mode de communication met en oeuvre au moins un canal commun (FACH) destiné à l'ensemble desdits terminaux gérés par ledit dispositif émetteur.

7. Procédé selon la revendication 6, **caractérisé en ce que** ledit premier mode de communication met en oeuvre au moins un canal commun descendant de type canal d'accès (FACH) permettant ledit passage audit second mode de communication.

8. Procédé selon l'une quelconque des revendications 1 à 7, **caractérisé en ce que** ledit premier mode de communication met en oeuvre au moins un canal commun montant (RACH) pour acquitter des données transmises correctement audit terminal récepteur lors de la mise en oeuvre du second mode de communication.

9. Procédé selon l'une quelconque des revendications 1 à 8, **caractérisé en ce que** ledit second mode de communication (OFDM) est adapté à transmettre des données à haut débit entre ledit dispositif émetteur et ledit terminal récepteur.

10. Procédé selon la revendication 9, **caractérisé en ce que** ledit second mode de communication est adapté à transmettre des données de type internet audit terminal récepteur.

11. Procédé selon l'une quelconque des revendications 1 à 10, **caractérisé en ce que** ledit dispositif émetteur est une station de base de réseau de communication cellulaire.

12. Signal de réseau de communication (100) comprenant au moins un dispositif d'émission (101) et au moins un terminal (102) adapté à recevoir des données de ladite au moins un dispositif d'émission,
comprenant deux modes de communication dits respectivement premier et second modes de communication :
- le premier mode de communication basé sur une modulation à porteuse unique, étant mis en oeuvre lors de l'établissement (304; 309, 312) d'une communication au moins un desdits dispositif d'émission, dit dispositif émetteur et entre un desdits terminaux, dit terminal récepteur ; et
- le second mode de communication (307, 310) utilisant une modulation à porteuses multiples (OFDM), étant mis en oeuvre sur un canal de communication utilisant ladite modulation à porteuses multiples, affecté à la communication entre ledit dispositif émetteur et ledit terminal récepteur ;
**caractérisé en ce que** lesdits premier et second modes de communication sont mis en oeuvre successivement et alternativement.

13. Dispositif émetteur (101) destiné à être mis en oeuvre dans un réseau de communication (100) comprenant au moins un terminal (102) adapté à recevoir des données dudit dispositif émetteur,
comprenant les moyens suivants :
- moyens d'établissement d'une communication entre ledit dispositif émetteur et un desdits terminaux, dit terminal récepteur, à l'aide d'un premier mode de communication (304, 309, 312) basé sur une modulation à porteuse unique ; et
- moyens de passage à un second mode de communication (307, 310) utilisant une modulation à porteuses multiples (OFDM), un canal de communication utilisant ladite modulation à porteuses multiples étant affecté à la communication entre ledit dispositif émetteur et ledit terminal récepteur ;
**caractérisé en ce que** lesdits premier et second modes de communication sont mis en oeuvre successivement et alternativement.

14. Terminal récepteur (102) destiné à être mis en oeuvre dans un réseau de communication (100) comprenant au moins un dispositif d'émission (101), ledit terminal étant adapté recevoir des données dudit au moins un dispositif d'émission,
comprenant les moyens suivants :
- moyens d'établissement d'une communication entre un desdits dispositifs d'émission, dit dispositif émetteur, et ledit terminal à l'aide d'un premier mode de communication (304, 309, 312) basé sur une modulation à porteuse unique ; et
- moyens de passage à un second mode de communication (307, 310) utilisant une modulation à porteuses multiples (OFDM), un canal de communication utilisant ladite modulation à porteuses multiples étant affecté à la communication entre ledit dispositif émetteur et ledit terminal récepteur ;
**caractérisé en ce que** lesdits premier et second modes de communication sont mis en oeuvre successivement et alternativement.

## Claims

1. Method for management of communications in a communication network (100) comprising at least one transmission device (101) and at least one terminal (102) adapted for receiving data from said at least one transmission device,
comprising the following steps:
- setting up (304, 309, 312) a communication between one of said transmission devices called the transmitter device, and one of said terminals called the receiver terminal, using a first communication mode based on a single carrier modulation; and
- changing over to a second communication mode (307, 310) using a multiple carrier modulation (OFDM), a communication channel using said multiple carrier modulation being assigned to the communication between said transmitter device and said receiving terminal;
wherein said first and second communication modes are implemented successively and alternately.

2. Method according to claim 1, wherein said modulation is an OFDM type modulation with a guard interval.

3. Method according to claim 1, wherein said modulation is a IOTA type modulation.

4. Method according to any one of claims 1 to 3, wherein said first communication mode is adapted for carrying out operations for management of setting up (301, 302, 304), maintaining (309), and closing (312) a communication between the transmitter device and the receiver terminal.

5. Method according to any one of claims 1 to 4 wherein said communication network is a mobile communication network (UMTS).

6. Method according to claim 5, wherein said first communication mode uses at least one common channel (FACH) that is intended to all the terminals managed by said transmission device.

7. Method according to claim 6, wherein said first communication mode uses at least one downlink common channel of access channel type (FACH), enabling said changeover to said second communication mode.

8. Method according to any one of claims 1 to 7, wherein said first communication mode uses at least one uplink common channel (RACH) to acknowledge correctly transmitted data to said reception terminal when said second communication mode is being used.

9. Method according to any one of claims 1 to 8, said second communication mode (OFDM) is adapted for transmitting data at high speed between said transmitter device and said receiver terminal.

10. Method according to claim 9, wherein said second communication mode is adapted for transmitting Internet type data to said receiver terminal.

11. Method according to any one of claims 1 to 10, wherein said transmitter device is a base station in a cellular communication network.

12. Communication network signal (100) comprising at least one transmission device (101) and at least one terminal (102) adapted for receiving data from said at least transmission device,
comprising two communication modes, called first and second communication modes respectively:
- the first communication mode based on a single carrier modulation, being used when setting up (304, 309, 312) a communication between at least one of said transmission devices, called the transmitter device, and one of said terminals called the receiver terminal; and
- the second communication mode (307, 310) using a multiple carrier modulation (OFDM) being used on a communication channel using said multiple carrier modulation, assigned to communication between said transmitter device and said receiver terminal,
wherein said first and second communication modes are used successively and alternately.

13. Transmitter device (101) designed to be implemented in a communication network (100) comprising at least one terminal (102) adapted for receiving data from said transmission device,
comprising the following means:
- means of setting up a communication between said transmitter device and one of said terminals, called the receiver terminal, using a first communication mode (304, 309, 312) based on a single carrier modulation; and
- means of changing over to a second communication mode (307, 310) using a multiple carrier modulation (OFDM), a communication channel using the said multiple carrier modulation being assigned to communication between said transmitter device and said receiver terminal;
wherein said first and second communication modes are used successively and alternately.

14. Receiver terminal (102) designed to be implemented in a communication network (100) comprising at least one transmission device (101), said terminal being adapted for receiving data from said at least one transmission device,
comprising the following means:
- means of setting up a communication between one of said transmission devices, called the transmitter device, and said terminal using a first communication mode (304, 309, 312) based on a single carrier modulation; and
- means of changing over to a second communication mode (307, 310) using a multiple carrier modulation (OFDM), a communication channel using said multiple carrier modulation being assigned to communication between said transmitter device and said receiver terminal;
wherein said first and second communication modes are used successively and alternately.

## Patentansprüche

1. Kommunikationsverwaltungsverfahren in einem Kommunikationsnetz (100) mit mindestens einer Sendeeinrichtung (101) und mindestens einem Endgerät (102), welches zum Empfangen von Daten von der mindestens einen Sendeeinrichtung ausgebildet ist, mit den folgenden Schritten:
- Aufbauen (304, 309, 312) einer Kommunikation zwischen einer der Sendeeinrichtungen, Sendebaustein genannt, und einem der Endgeräte, Empfangsendgerät genannt, mit Hilfe eines ersten auf einer Einträgermodulation basierenden Kommunikationsmodus; und
- Übergehen zu einem zweiten, eine Mehrträgermodulation ("Orthogonal Frequency Division Multiplex" OFDM) anwendenden Kommunikationsmodus (307, 310), wobei ein die Mehrträgermodulation anwendender Kommunikationskanal für die Kommunikation zwischen dem Sendebaustein und dem Empfangsendgerät vorgesehen ist;
**dadurch gekennzeichnet, dass** die ersten und zweiten Kommunikationsmodi aufeinanderfolgend und wechselweise zum Einsatz kommen.

2. Verfahren nach Anspruch 1, **dadurch gekennzeichnet, dass** die Modulation eine Modulation des Typs OFDM mit Schutzintervall ist.

3. Verfahren nach Anspruch 1, **dadurch gekennzeichnet, dass** die Modulation eine Modulation des Typs IOTA ("Isotropic Orthogonal Transfrom Algorithm") ist.

4. Verfahren nach einem der Ansprüche 1 bis 3, **dadurch gekennzeichnet, dass** der erste Kommunikationsmodus dazu ausgebildet ist, Verwaltungsvorgänge zum Aufbauen (301, 302, 304), zum Aufrechterhalten (309) und zum Beenden (312) einer Kommunikation zwischen dem Sendebaustein und dem Empfangsendgerät auszuführen.

5. Verfahren nach einem der Ansprüche 1 bis 4, **dadurch gekennzeichnet, dass** das Kommunikationsnetz ein mobiles Kommunikationsnetz ("Universal Mobile Telecommunication System" UMTS) ist.

6. Verfahren nach Anspruch 5, **dadurch gekennzeichnet, dass** der erste Kommunikationsmodus mindestens einen für die Gesamtheit der von dem Sendebaustein verwalteten Endgeräte bestimmten gemeinsamen Kanal ("Forward Access Channel" FACH) nutzt.

7. Verfahren nach Anspruch 6, **dadurch gekennzeichnet, dass** der erste Kommunikationsmodus mindestens einen absteigenden gemeinsamen Kanal des Typs Zugangskanal (FACH) nutzt, welcher den Übergang zu dem zweiten Kommunikationsmodus erlaubt.

8. Verfahren nach einem der Ansprüche 1 bis 7, **dadurch gekennzeichnet, dass** der erste Kommunikationsmodus mindestens einen ansteigenden gemeinsamen Kanal ("Random Access Channel" RACH) zum Abgleichen von korrekt dem Empfangsendgerät übermittelten Daten beim zum Einsatz kommen des zweiten Kommunikationsmodus nutzt.

9. Verfahren nach einem der Ansprüche 1 bis 8, **dadurch gekennzeichnet, dass** der zweite Kommunikationsmodus (OFDM) dazu ausgebildet ist, Daten mit hoher Übertragungsrate zwischen dem Sendebaustein und dem Empfangsendgerät zu übertragen.

10. Verfahren nach Anspruch 9, **dadurch gekennzeichnet, dass** der zweite Kommunikationsmodus dazu ausgebildet ist, Daten des Typs Internet zu dem Empfangsendgerät zu übertragen.

11. Verfahren nach einem der Ansprüche 1 bis 10, **dadurch gekennzeichnet, dass** der Sendebaustein eine ortsfeste Basisstation eines zellulären Kommunikationsnetzes ist.

12. Signal eines Kommunikationsnetzes (100) mit mindestens einer Sendeeinrichtung (101) und mindestens einem zum Empfangen von Daten von der mindestens einen Sendeeinrichtung ausgebildeten Endgerät (102), und mit zwei jeweils erster und zweiter Kommunikationsmodus genannten Kommunikationsmodi:
- dem ersten auf einer Einträgermodulation basierenden Kommunikationsmodus, welcher während dem Aufbauen (304, 309, 312) einer Kommunikation zwischen mindestens einer der Sendeeinrichtungen, genannt Sendebaustein, und zwischen einem der Endgeräte, genannt Empfangsendgerät, zum Einsatz kommt; und
- dem zweiten, eine Mehrträgermodulation (OFDM) anwendenden Kommunikationsmodus (307, 310), welcher auf einem die Mehrträgermodulation anwendenden Kommunikationskanal zum Einsatz kommt und für die Kommunikation zwischen dem Sendebaustein und dem Empfangsendgerät vorgesehen ist;
**dadurch gekennzeichnet, dass** die ersten und zweiten Kommunikationsmodi aufeinanderfolgend und wechselweise zum Einsatz kommen.

13. Sendebaustein (101), welcher dazu bestimmt ist, in einem Kommunikationsnetz (100) mit mindestens einem zum Empfangen von Daten des Sendebausteins ausgebildeten Endgerät (102) zum Einsatz zu kommen, mit den folgenden Mitteln:
- Mittel zum Aufbauen einer Kommunikation zwischen dem Sendebaustein und einem der Endgeräte, genannt Empfangsendgerät, mit Hilfe eines auf einer Einträgermodulation basierenden ersten Kommunikationsmodus (304, 309, 312); und
- Mittel zum Übergehen zu einem eine Mehrträgermodulation (OFDM) anwendenden zweiten Kommunikationsmodus (307, 310), wobei ein die Mehrträgermodulation anwendender Kommunikationskanal für die Kommunikation zwischen dem Sendebaustein und dem Empfangsendgerät vorgesehen ist;
**dadurch gekennzeichnet, dass** die ersten und zweiten Kommunikationsmodi aufeinanderfolgend und wechselweise zum Einsatz kommen.

14. Empfangsendgerät (102), welches dazu bestimmt ist, in einem Kommunikationsnetz (100) mit mindestens einer Sendeeinrichtung (101) zum Einsatz zu kommen, wobei das Endgerät dazu ausgebildet ist, Daten von der mindestens einen Sendeeinrichtung zu empfangen, mit den folgenden Mitteln:
- Mittel zum Aufbauen einer Kommunikation zwischen dem Sendebaustein und einem der Endgeräte, genannt Empfangsendgerät, mit Hilfe eines auf einer Einträgermodulation basierenden ersten Kommunikationsmodus (304, 309, 312); und
- Mittel zum Übergehen zu einem eine Mehrträgermodulation (OFDM) anwendenden zweiten Kommunikationsmodus (307, 310), wobei ein die Mehrträgermodulation anwendender Kommunikationskanal für die Kommunikation zwischen dem Sendebaustein und dem Empfangsendgerät vorgesehen ist;
**dadurch gekennzeichnet, dass** die ersten und zweiten Kommunikationsmodi aufeinanderfolgend und wechselweise zum Einsatz kommen.
